# EUROPÄISCHE PATENTSCHRIFT

(11) **EP 3 502 629 B1**
(45) Veröffentlichungstag und Bekanntmachung des Hinweises auf die Patenterteilung: **06.12.2023**
(21) Anmeldenummer: 18213968.3
(22) Anmeldetag: 19.12.2018
(51) Int. Cl.: G01D 5/353

(54) **SYSTEM UND VERFAHREN ZUR ÜBERWACHUNG DES ANPRESSDRUCKS EINER KRAFT- UND/ODER FORMSCHLÜSSIGEN VERBINDUNG**
SYSTEM AND METHOD FOR MONITORING THE CONTACT PRESSURE OF A NON-POSITIVE AND/OR POSITIVE CONNECTION
SYSTÈME ET PROCÉDÉ DE SURVEILLANCE DE LA PRESSION D'APPUI D'UNE LIAISON PAR COMPLÉMENTARITÉ DE FORCE ET / OU DE FORME

(30) Priorität: 20.12.2017 DE 102017130761
(43) Veröffentlichungstag der Anmeldung: 26.06.2019
(73) Patentinhaber: RWE Offshore Wind GmbH, 45141 Essen (DE)
(72) Erfinder: JAHN, Christian, 25451 Quickborn (DE)
(74) Vertreter: Cohausz & Florack

(56) Entgegenhaltungen:
- EP-A2- 0 487 450
- EP-A2- 2 159 417
- US-A1- 2012 161 446
- US-A1- 2012 274 334
- US-A1- 2014 305 223

## Beschreibung

Schraubverbindungen ermöglichen eine einfache und schnelle Montage von Bauteilen. Bauteilbewegungen, Erschütterungen oder Vibrationen können jedoch dazu führen, dass sich derartige Verbindungen mit der Zeit lösen, sodass ein Spiel zwischen den durch die Schraubverbindung verbundenen Bauteilen entsteht oder der Zusammenhalt der Bauteile nicht mehr gewährleistet werden kann.

Dies ist insbesondere bei großen Anlagen, wie zum Beispiel bei Windenergieanlagen kritisch, sodass zum Beispiel die Schraubverbindungen, mit denen die Rotorblätter an der Rotornabe einer Windenergieanlage befestigt sind, regelmäßig überprüft werden müssen, um gegebenenfalls nachgezogen werden zu können. Die Überprüfung der Schraubverbindungen ist jedoch gerade bei Windenergieanlagen sehr aufwändig, da erst ein Techniker zu der betreffenden Windenergieanlage gelangen und diese dann besteigen muss, um zu den zu überprüfenden Schraubverbindungen zu gelangen. Bei Offshore-Anlagen ist dieser Aufwand besonders hoch. Ähnliche Probleme gelten für schwer zugängliche Schraubverbindungen an anderen Anlagen.

Aus der US 2014/0305223 A1 ist ein Verfahren zur Bestimmung der mechanischen Spannung an Statorschrauben von Generatoren konventioneller Gaskraftwerke unter Verwendung eines Faser-Bragg-Gitter-Sensors bekannt. Aus der EP 0 487 450 A2 ist weiter ein Verfahren zur faseroptischen Kraftmessung zur Überwachung von in Beton verankerten Schwerlastdübeln oder ähnlichen Bauteilen bekannt. Aus der US 2012/0274334 A1 ist weiter die Überwachung von Komponenten einer Produktionsanlage basierend auf Messungen mittels eines Faser-Bragg-Gitter-Sensors bekannt.

Vor diesem Hintergrund liegt der vorliegenden Erfindung die Aufgabe zugrunde, ein System und ein Verfahren zur Verfügung zu stellen, mit dem eine einfachere Überwachung von kraft- und/oder formschlüssigen Verbindungen, insbesondere Schraubverbindungen, ermöglicht wird.

Diese Aufgabe wird bei einem System zur Überwachung des Anpressdrucks einer kraft- und/oder formschlüssigen Verbindung, mit einem ersten Bauteil, das dazu vorgesehen ist, mittels einer kraft- und/oder formschlüssigen Verbindung mit einem zweiten Bauteil verbunden zu werden, wobei das erste Bauteil eine Kontaktfläche aufweist, die dazu vorgesehen ist, bei der Herstellung der kraft- und/oder formschlüssigen Verbindung mit dem zweiten Bauteil in Anlage zu kommen, insbesondere im Bereich der kraft- und/oder formschlüssigen Verbindung, wobei ein faseroptischer Sensor derart im Bereich der Kontaktfläche des ersten Bauteils angeordnet ist, dass eine von dem auf die Kontaktfläche wirkenden Anpressdruck abhängige mechanische Belastung auf den faseroptischen Sensor übertragen wird, erfindungsgemäß dadurch gelöst, dass im Bereich der Kontaktfläche eine Nut vorgesehen ist, in der der faseroptische Sensor angeordnet ist, wobei zwischen dem faseroptischen Sensor und der Ebene der Kontaktfläche ein Druckübertragungselement vorgesehen ist, das einen von einem auf die Kontaktfläche wirkenden Anpressdruck (p) abhängigen reduzierten Druck auf den faseroptischen Sensor überträgt, und wobei das Druckübertragungselement ein elastisches Element ist.

Die oben genannte Aufgabe wird erfindungsgemäß weiterhin gelöst durch die Verwendung des zuvor beschriebenen Systems mit einem faseroptischen Sensor zur Überwachung des Anpressdrucks einer kraft- und/oder formschlüssigen Verbindung, insbesondere einer Schraubverbindung.

Weiterhin wird die oben genannte Aufgabe erfindungsgemäß gelöst durch ein Verfahren zur Überwachung des Anpressdrucks einer kraft- und/oder formschlüssigen Verbindung unter Verwendung des zuvor beschriebenen Systems, bei dem durch Messung mittels eines faseroptischen Sensors ein Wert für eine auf den faseroptischen Sensor wirkende mechanische Belastung, insbesondere Druckbelastung, bestimmt und die Entwicklung dieses Werts über die Zeit überwacht wird. Der faseroptische Sensor ist derart im Bereich einer Kontaktfläche eines ersten Bauteils, in dem das erste Bauteil durch die kraft- und/oder formschlüssige Verbindung mit einem zweiten Bauteil in Anlage ist, angeordnet, dass eine von dem auf die Kontaktfläche wirkenden Anpressdruck abhängige mechanische Belastung auf den faseroptischen Sensor übertragen wird.

Es wurde erkannt, dass faseroptische Sensoren besonders gut dazu geeignet sind, den Anpressdruck einer kraft- und/oder formschlüssigen Verbindung zu überwachen, da sich diese Sensoren direkt an einer kraft- und/oder formschlüssigen Verbindung anordnen lassen und daher Information über den in der Verbindung herrschenden Anpressdruck liefern können.

Durch das Vorsehen eines faseroptischen Sensors kann der Anpressdruck in der kraft- und/oder formschlüssigen Verbindung überwacht werden, ohne dass eine mechanische, manuelle Prüfung der Verbindung erforderlich ist. Dadurch können sonst regelmäßig vorzunehmende manuelle Prüfungen entfallen oder zumindest auf ein Minimum reduziert werden. Stattdessen kann ein Eingriff, beispielsweise ein Nachziehen der Verbindung, dann erfolgen, wenn mittels des faseroptischen Sensors eine Reduzierung des Anpressdrucks unter einen vorgegebenen Wert detektiert wurde.

Das System, das Verfahren und die Verwendung betreffen die Überwachung des Anpressdrucks einer kraft- und/oder formschlüssigen Verbindung. Die Verbindung ist insbesondere kraftschlüssig und kann zusätzlich auch formschlüssig sein. Vorzugsweise handelt es sich bei dieser Verbindung um eine Verbindung zweier Bauteile, die mit einem nicht unerheblichen Anpressdruck aufeinandergedrückt werden. Insbesondere kann es sich bei der Verbindung um eine Schraubverbindung handeln. Alternativ hierzu kommen jedoch auch Klemmverbindungen in Frage.

Das System umfasst ein erstes Bauteil, das dazu vorgesehen ist, mittels einer kraft- und/oder formschlüssigen Verbindung mit einem zweiten Bauteil verbunden zu werden. Das erste Bauteil weist vorzugsweise ein Verbindungsmittel auf, zum Beispiel einen Gewindezapfen oder eine Gewindebohrung, das zusammen mit einem dazu komplementären Verbindungsmittel, zum Beispiel einer Mutter bzw. einem Gewindezapfen oder einer Schraube, die kraft- und/oder formschlüssige Verbindung bildet. Bei dem ersten Bauteil kann es sich alternativ auch um ein Bauteil handeln, das zwischen zwei Bauteilen mit komplementären Verbindungsmitteln angeordnet ist, selbst jedoch kein Verbindungsmittel aufweist. Beispielsweise kann es sich bei dem ersten Bauteil um eine Komponente oder um eine Unterlegscheibe handeln, die zwischen zwei aneinanderzuschraubenden Komponenten positioniert wird.

Bei dem zweiten Bauteil handelt es sich um ein Bauteil, das nach Herstellung der kraft- und/oder formschlüssigen Verbindung mit dem ersten Bauteil in Anlage ist.

Weist das erste Bauteil ein Verbindungsmittel auf, so kann das zweite Bauteil beispielsweise ein dazu komplementäres Verbindungsmittel aufweisen. Alternativ kann es sich bei dem zweiten Bauteil auch um ein Bauteil handeln, das zwischen zwei Bauteilen mit komplementären Verbindungsmitteln angeordnet ist, selbst jedoch kein Verbindungsmittel aufweist. Beispielsweise kann es sich bei dem zweiten Bauteil um eine Komponente oder um eine Unterlegscheibe handeln, die zwischen zwei aneinanderzuschraubenden Komponenten positioniert wird.

Das System kann insbesondere auch das zweite Bauteil umfassen. Insbesondere kann das System das erste und das zweite Bauteil umfassen, wenn diese bereits durch die kraft- und/oder formschlüssigen Verbindung miteinander verbunden sind. In diesem Fall umfasst das System eine bereits hergestellte kraft- und/oder formschlüssige Verbindung zwischen dem ersten und zweiten Bauteil.

Das erste Bauteil weist eine Kontaktfläche auf, die dazu vorgesehen ist, bei der Herstellung der kraft- und/oder formschlüssigen Verbindung mit dem zweiten Bauteil in Anlage zu kommen. Die Kontaktfläche ist demnach eine Fläche auf dem ersten Bauteil, auf die ein Anpressdruck der kraft- und/oder formschlüssigen Verbindung wirkt, wenn die kraft- und/oder formschlüssige Verbindung hergestellt ist. Die Kontaktfläche kann Teil einer größeren Fläche des ersten Bauteils sein.

Vorzugsweise ist die Kontaktfläche im Bereich der kraft- und/oder formschlüssigen Verbindung angeordnet, insbesondere im Bereich eines Verbindungsmittels zur Herstellung der kraft- und/oder formschlüssigen Verbindung. Auf diese Weise wird der durch das bzw. die Verbindungsmittel bewirkte Anpressdruck unmittelbar auf die Kontaktfläche übertragen.

Im Bereich der Kontaktfläche des ersten Bauteils ist ein faseroptischer Sensor angeordnet. Unter einem faseroptischen Sensor wird ein Sensor verstanden, der auf einer optischen Lichtleitfaser, insbesondere einer Glasfaser, basiert. Faseroptische Sensoren sind aus dem Stand der Technik grundsätzlich bekannt, sodass deren Aufbau und Funktionsweise an dieser Stelle nicht näher erläutert werden muss. Insbesondere sind aus dem Stand der Technik faseroptische Sensoren bekannt, mit denen sich ein auf die Faser wirkender Druck bestimmen lässt (sogenannte faseroptische Drucksensoren), so dass auch diese an dieser Stelle nicht im Detail erläutert werden müssen.

Der faseroptische Sensor ist derart im Bereich der Kontaktfläche des ersten Bauteils angeordnet, dass eine von dem auf die Kontaktfläche wirkenden Anpressdruck abhängige mechanische Belastung auf den faseroptischen Sensor übertragen wird. Zu diesem Zweck kann der faseroptische Sensor beispielsweise in unmittelbarer Nähe zur Kontaktfläche, beispielsweise unmittelbar unterhalb der Kontaktfläche, angeordnet sein. Insbesondere können ein oder mehrere Übertragungselemente vorgesehen sein, um die Kraft bzw. den Druck von der Kontaktfläche auf den faseroptischen Sensor zu übertragen.

Da das zweite Bauteil nach Herstellung der kraft- und/oder formschlüssigen Verbindung im Bereich der Kontaktfläche des ersten Bauteils an diesem anliegt, wird von dem zweiten Bauteil ein Anpressdruck auf das erste Bauteil ausgeübt, der sich durch die Anordnung des faseroptischen Sensors im Bereich der Kontaktfläche auf diesen überträgt, sodass der faseroptische Sensor eine Überwachung des Anpressdrucks ermöglicht.

Im Folgenden werden verschiedene Ausführungsformen des Systems, der Verwendung und des Verfahrens beschrieben, wobei die einzelnen Ausführungsformen jeweils gesondert für die Verwendung, das Verfahren und das System gelten. Weiterhin können die Ausführungsformen auch miteinander kombiniert werden.

Bei einer Ausführungsform umfasst der faseroptische Sensor einen Abschnitt einer optischen Faser, der derart im Bereich der Kontaktfläche des ersten Bauteils angeordnet ist, dass eine von dem auf die Kontaktfläche wirkenden Anpressdruck abhängige mechanische Belastung auf den Abschnitt der optischen Faser übertragen wird. Bei der Übertragung einer mechanischen Belastung, insbesondere eines Drucks auf einen Abschnitt einer optischen Faser, verändern sich deren Eigenschaften durch die in der Faser hervorgerufenen Spannungen. Diese veränderten Eigenschaften lassen sich optisch detektieren, beispielsweise indem die Rayleigh- und/oder die Brillouin-Streuung in der optischen Faser gemessen und analysiert wird. Auf diese Weise lässt sich dann ein Maß für die Spannung und damit auch ein Maß für die auf die Faser wirkende Belastung, insbesondere den Druck, ermitteln. Derartige Messsysteme sind aus dem Stand der Technik grundsätzlich bekannt und bedürfen daher an dieser Stelle keiner weiteren Erläuterung.

Die Verwendung eines Abschnitts einer optischen Faser für den faseroptischen Sensor hat den Vorteil, dass Spannungen über einen gesamten Abschnitt einer optischen Faser detektiert werden können, sodass zum Beispiel Veränderungen in verschiedenen Bereichen einer Verbindung oder gegebenenfalls auch Veränderungen mehrerer Verbindungen mit der Faser überwacht werden können.

Bei einer weiteren Ausführungsform umfasst der faseroptische Sensor ein Sensorelement, insbesondere einen Resonator, am Ende einer optischen Faser, das derart im Bereich der Kontaktfläche des ersten Bauteils angeordnet ist, dass eine von dem auf die Kontaktfläche wirkenden Anpressdruck abhängige mechanische Belastung auf das Sensorelement übertragen wird. Aus dem Stand der Technik sind beispielsweise Sensorelemente nach dem Fabry-Perot-Prinzip genannt, bei denen mittels eines durch zwei Spiegel am Ende einer optischen Faser gebildeten Resonators ein auf das Ende der Faser wirkender Druck bestimmt werden kann. Ein solches Sensorelement hat den Vorteil, dass der Druck an einer ganz bestimmten Stelle gezielt bestimmt werden kann.

Erfindungsgemäß ist im Bereich der Kontaktfläche eine Nut vorgesehen, in der der faseroptische Sensor angeordnet ist, wobei zwischen dem faseroptischen Sensor und der Ebene der Kontaktfläche ein

Druckübertragungselement vorgesehen ist, das einen von einem auf die Kontaktfläche wirkenden Anpressdruck abhängigen reduzierten Druck auf den faseroptischen Sensor überträgt. Das Druckübertragungselement kann insbesondere eine in der Kontaktfläche angeordnete Fläche und eine an dem faseroptischen Sensor anliegende Fläche aufweisen.

Auf diese Weise wird die auf den faseroptischen Sensor wirkende Belastung reduziert. Da der Anpressdruck zwischen den Bauteilen bei einer kraft- und/oder formschlüssigen Verbindung sehr hoch sein kann, insbesondere wenn große Bauteile miteinander verbunden werden sollen, wie zum Beispiel ein Rotorblatt und eine Rotornabe einer Windenergieanlage, kann der faseroptische Sensor beschädigt oder zerstört werden, wenn er dem Druck direkt ausgesetzt wird. Durch das Vorsehen einer Nut in der Kontaktfläche liegt der faseroptische Sensor nicht direkt in der Kontaktfläche und damit zwischen den beiden Bauteilen, sondern wird durch das vorgesehene Druckübertragungselement indirekt mit einem von dem Anpressdruck abhängigen reduzierten Druck beaufschlagt. Der von dem Druckübertragungselement auf den faseroptischen Sensor übertragene Druck steht vorzugsweise in einem Proportionalitätsverhältnis zum Anpressdruck oder einer Funktion, beispielsweise einer Potenz oder einem Polynom, davon.

Bei dem Druckübertragungselement handelt es sich erfindungsgemäß um ein elastisches Element. Beispielsweise kann es sich um ein Druckübertragungselement aus Kunststoff oder Gummi handeln. Weiterhin kann das Druckübertragungselement auch eine in der Kontaktfläche angeordnete erste Fläche und eine an dem faseroptischen Sensor anliegende zweite Fläche aufweisen, wobei die zweite Fläche größer ist als die erste Fläche. Auf diese Weise wird der Druck durch die Vergrößerung der Fläche zur optischen Faser reduziert.

Bei einer weiteren Ausführungsform ist das erste Bauteil dazu vorgesehen, mittels mehrerer kraft- und/oder formschlüssigen Verbindungen mit einem zweiten Bauteil oder mehreren zweiten Bauteilen verbunden zu werden. Das erste Bauteil weist mehrere Kontaktflächen auf, die jeweils dazu vorgesehen sind, bei der Herstellung einer jeweiligen der kraft- und/oder formschlüssigen Verbindungen im Bereich der jeweiligen kraft- und/oder formschlüssigen Verbindungen mit dem einen oder einem der mehreren zweiten Bauteile in Anlage zu kommen. Der faseroptische Sensor umfasst mehrere Abschnitte einer optischen Faser, die jeweils derart im Bereich einer jeweiligen Kontaktfläche des ersten Bauteils angeordnet sind, dass eine von dem auf die jeweilige Kontaktfläche wirkenden Anpressdruck abhängige mechanische Belastung auf den jeweiligen Abschnitt der optischen Faser übertragen wird.

Typischerweise sind große Bauteile, wie zum Beispiel ein Rotorblatt einer Windenergieanlage, mittels mehrerer Verbindungen, beispielsweise mehrerer Schraubverbindungen, mit einem anderen Bauteil, beispielsweise einer Rotornabe einer Windenergieanlage, verbunden. Es wurde festgestellt, dass sich mit einer optischen Faser mehrere dieser Verbindungen überwachen lassen, indem die Faser durch die jeweiligen Kontaktflächen im Bereich der einzelnen Verbindungen geführt wird. Auf diese Weise kann die Anzahl der für die Überwachung mehrerer Verbindungen erforderlichen Fasern reduziert werden.

Das erste Bauteil weist bei der Ausführungsform mehrere Kontaktflächen auf, die jeweils dazu vorgesehen sind, bei der Herstellung einer jeweiligen der kraft- und/oder formschlüssigen Verbindungen im Bereich der jeweiligen kraft- und/oder formschlüssigen Verbindungen mit dem einen oder einem der mehreren zweiten Bauteile in Anlage zu kommen. Die Kontaktflächen befinden sich demnach jeweils im Bereich einer der kraft- und/oder formschlüssigen Verbindungen, so dass sich der durch die jeweilige Verbindung bewirkte Anpressdruck gut durch einen faseroptischen Sensor im Bereich der entsprechenden Kontaktfläche bestimmen lässt. Einige oder sogar alle Kontaktflächen können Teil einer größeren Fläche des ersten Bauteils sein, beispielsweise einer größeren Anlagefläche, an dem ein zweites Bauteil nach Herstellung der Verbindungen an dem ersten Bauteil anliegt. Bei den Kontaktflächen handelt es sich in diesem Fall um jeweilige Teilflächen der größeren Fläche im Bereich jeweils einer der Verbindungen, insbesondere um ein Verbindungsmittel des ersten Bauteils zur Herstellung der jeweiligen Verbindung.

Bei einer weiteren Ausführungsform umfasst das System eine mit dem faseroptischen Sensor verbindbare oder verbundene optische Messanordnung. Mit der Messanordnung kann die Auswertung der Eigenschaften der optischen Faser erfolgen, um einen Wert für den Anpressdruck zu ermitteln. Der faseroptische Sensor kann mit einem Ende oder mit beiden Enden der optischen Faser des faseroptischen Sensors mit der optischen Messanordnung verbunden sein. Die optische Messanordnung umfasst vorzugsweise eine Lichtquelle, um einen Lichtpuls durch die optische Faser zu senden, sowie einen Analysator, um die Reflexion oder den Lichtimpuls nach Durchlaufen der Faser zu messen und zu analysieren.

Bei einer weiteren Ausführungsform ist die optische Messanordnung dazu eingerichtet, eine Messung an dem faseroptischen Sensor durchzuführen und aus dem Messergebnis einen Wert für eine auf den faseroptischen Sensor wirkende mechanische Belastung, insbesondere Druckbelastung, zu bestimmen.

Bei einer weiteren Ausführungsform ist die optische Messanordnung dazu eingerichtet, abhängig von einer Laufzeit eines Signals durch den faseroptischen Sensor eine Position einer auf den faseroptischen Sensor wirkenden mechanischen Belastung zu bestimmen. Auf diese Weise kann, wenn der faseroptische Sensor eingesetzt wird, um mehrere kraft- und/oder formschlüssigen Verbindungen wie zum Beispiel mehrere Schraubverbindungen zu überwachen, festgestellt werden, bei welcher Verbindung welcher Anpressdruck vorliegt beziehungsweise ob sich der Anpressdruck an einer bestimmten Verbindung verändert.

Bei einer weiteren Ausführungsform umfasst das System eine Steuereinrichtung, die dazu eingerichtet ist, einen Wert für eine auf den faseroptischen Sensor wirkende mechanische Belastung, insbesondere Druckbelastung, zu überwachen, und bei einer Reduzierung des Werts unterhalb des vorgegebenen Grenzwerts die Ausgabe einer Meldung zu veranlassen. Auf diese Weise kann überwacht werden, ob sich eine der überwachten Verbindungen löst, sodass bei der Meldung entsprechende Gegenmaßnahmen ergriffen werden können. Es ist nicht erforderlich, dass der Anpressdruck oder die auf den faseroptischen Sensor wirkende Belastung absolut gemessen wird. Um einen Abfall des Anpressdrucks zu ermitteln, kann auch eine relative Änderung des mit dem faseroptischen Sensor gemessenen Wert überwacht werden.

Bei einer weiteren Ausführungsform wird der faseroptische Sensor oder das zuvor beschriebene System mit einem solchen Sensor zur Überwachung des Anpressdrucks einer kraft- und/oder formschlüssigen Verbindung an einer Windenergieanlage verwendet. Es hat sich herausgestellt, dass gerade bei einer solchen Anlage aufgrund der hohen Kosten für die regelmäßige Untersuchung der Schraubverbindungen zwischen Rotorblatt und Rotornabe besonders hohe Kostenvorteile durch die vorgeschlagene Lösung erzielt werden können.

Die Messanordnung und die gegebenenfalls vorgesehene Steuereinrichtung können insbesondere am Boden, beispielsweise in einer Station der Windenergieanlage, angeordnet sein. Umfasst ein Windpark beispielsweise mehrere Windenergieanlagen, so können die Systeme in den einzelnen Windenergieanlagen installiert werden, wobei die optischen Fasern dann zu einer zentralen Station im Windpark geführt werden, in dem die Auswertung durch die optische Messanordnung erfolgt.

Bei einer weiteren Ausführungsform ist eine Steuereinrichtung des Systems dazu eingerichtet, die Durchführung des zuvor beschriebenen Verfahrens oder einer Ausführungsform davon zu veranlassen. Insbesondere kann die Steuereinrichtung einen elektronischen Speicher mit Befehlen aufweisen, deren Ausführung auf mindestens einem Mikroprozessor der Steuereinrichtung die Durchführung des Verfahrens veranlasst.

Weitere Merkmale und Vorteile der vorliegenden Erfindung ergeben sich aus der nachfolgenden Beschreibung von Ausführungsbeispielen, wobei auf die beigefügte Zeichnung Bezug genommen wird.

In der Zeichnung zeigen
- Fig. 1a-b: zwei Beispiele für faseroptische Sensoren,
- Fig. 2a-c: ein Ausführungsbeispiel des Systems,
- Fig. 3a-b: ein weiteres Ausführungsbeispiel des Systems und
- Fig. 4: ein Ausführungsbeispiel der Verwendung des Systems.

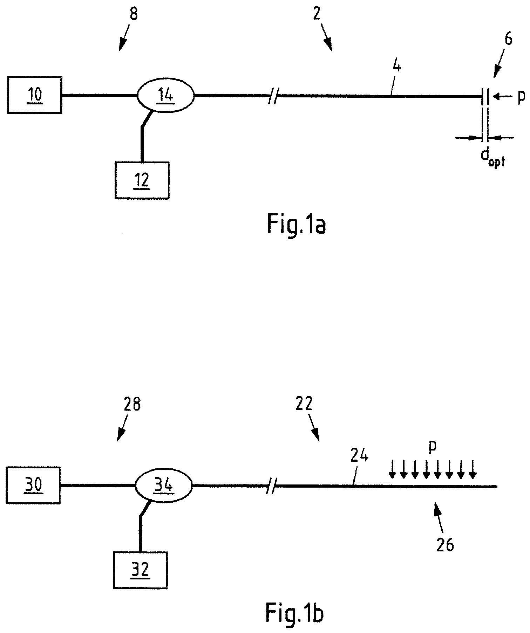

Figur 1a zeigt ein Beispiel eines faseroptischen Sensors in schematischer Darstellung. Der faseroptische Sensor 2 umfasst eine optische Faser 4, insbesondere eine Glasfaser, an deren Ende ein Sensorelement 6 in Form eines Fabry-Perot-Resonators angeordnet ist. Die Funktionsweise eines faseroptischen Sensors mit Fabry-Pérot-Resonator ist grundsätzlich bekannt und muss daher an dieser Stelle nicht im Detail beschrieben werden. Vom Prinzip her wird das durch die optische Faser 4 geleitete Licht in dem Resonator 6 mit zwei gegenüber angeordneten Spiegeln mehrfach reflektiert, wodurch es zur Interferenz der reflektierten Teilstrahlen kommt. Die Intensität des durch diese Interferenz bewirkten Lichtreflexes, der mit einer an die Faser 4 angeschlossenen optischen Messanordnung 8 bestimmt werden kann, ist stark abhängig von der optischen Länge dₒₚₜ des Resonators 6. Durch äußere Druckeinwirkung (Pfeil p) auf den Resonator 6 kommt es zu minimalen Veränderungen der optischen Länge dₒₚₜ des Resonators 6, die wiederum über die Interferenz des Lichts gemessen werden kann, sodass mit der optischen Messanordnung 8 ein Wert für den auf den faseroptischen Sensor 2, vorliegend auf den Resonator 6, wirkenden Druck bestimmt werden kann.

Die optische Messanordnung 8 umfasst eine Lichtquelle 10, mit der ein Lichtimpuls in die optische Faser 4 eingekoppelt werden kann, sowie einen Analysator 12, mit dem die Intensität des reflektierten, durch den Resonator 6 interferierten Lichtpulses bestimmt werden kann. Die Lichtquelle 10 und der Analysator 12 sind über einen optischen Koppler 14 an die Faser 4 gekoppelt. Der optische Koppler 14 kann beispielsweise einen teildurchlässigen Spiegel aufweisen.

Figur 1b zeigt ein weiteres Beispiel für einen faseroptischen Sensor in schematischer Darstellung. Der faseroptische Sensor 22 weist eine optische Faser 24 auf, wobei ein Abschnitt 26 der Faser durch einen druckbeaufschlagten Bereich (Pfeile P) verlegt ist. An die Faser 24 ist eine Messanordnung 28 mit einer Lichtquelle 30 angeschlossen, mit der ein Lichtpuls in die optische Faser 24 einkoppeln werden kann, und mit einem Analysator 32 zur Analyse des reflektierten Lichtpulses. Die Lichtquelle 10 und der Analysator 32 sind über einen optischen Koppler 34 mit der optischen Faser 24 gekoppelt, der beispielsweise einen teildurchlässigen Spiegel aufweisen kann.

Das Messprinzip derartiger faseroptischer Sensoren ist grundsätzlich bekannt und muss an dieser Stelle ebenfalls nicht im Einzelnen beschrieben werden. Vom Prinzip her erfolgt die Messung dadurch, dass mit der Lichtquelle 30 ein Lichtpuls in die optische Faser 24 eingekoppelt wird. Der reflektierte Lichtpuls wird dann in dem optischen Analysator 32 analysiert, und zwar insbesondere dessen spektrale Änderung und optional dessen Laufzeit.

Wird die optische Faser 24 im Bereich 26 zum Beispiel durch einen Druck (Pfeile P) belastet, kommt es in der Faser 24 dort zu lokalen Änderungen des Brechungsindex beziehungsweise zu Verspannungen, die Einfluss auf die Streuung des Lichts in der Faser, insbesondere auf die Rayleigh- und die Brillouin-Streuung haben. Beispielsweise führt eine auf die optische Faser wirkende Druckkraft zu einer Frequenzverschiebung des Brillouin-Signals.

Durch die Analyse des Lichtimpulses mit dem Analysator 32 kann auf diese Weise ein Wert für die auf die Faser 24 wirkende Belastung, insbesondere den Druck P, bestimmt werden. Durch eine Laufzeitmessung kann darüber hinaus bestimmt werden, an welcher Stelle der optischen Faser 24 die Belastung auf die Faser 24 wirkt. Wird die optische Faser 24 beispielsweise durch mehrere belastete Bereiche geführt, so kann durch die Laufzeitmessung bestimmt werden, in welchem der belasteten Bereiche welcher Druck anliegt.

Für die Zwecke der vorliegenden Lehre ist es grundsätzlich nicht erforderlich, dass der auf die faseroptischen Sensoren 2 bzw. 22 wirkende Druck als absoluter Wert bestimmt wird. Vielmehr ist es ausreichend, eine relative Veränderung dieses Werts über die Zeit zu bestimmen. Gleichwohl ist es denkbar, mittels einer Referenzmessung eine Kalibration des optischen Analysators 12 bzw. 32 vorzunehmen, sodass auch ein absoluter Wert für den auf die faseroptischen Sensoren 2 bzw. 22 wirkenden Druck bestimmt werden kann.

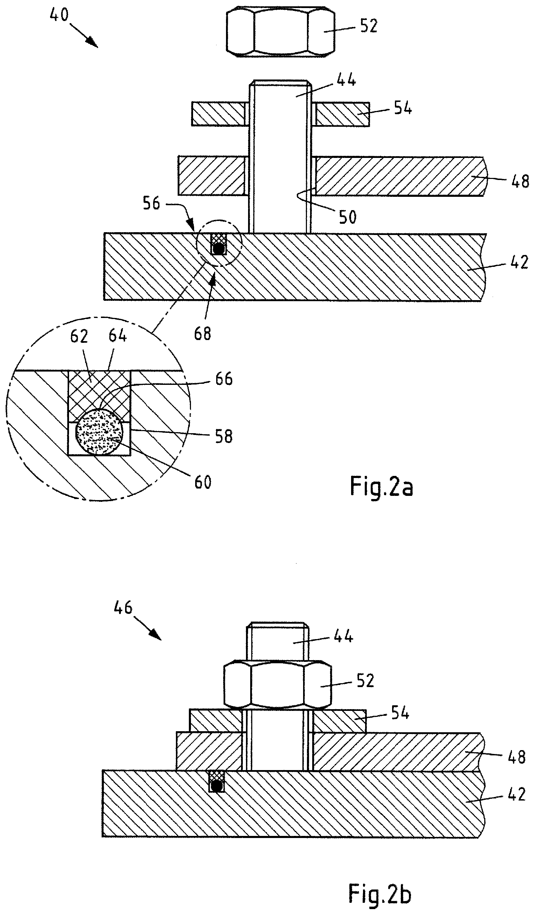

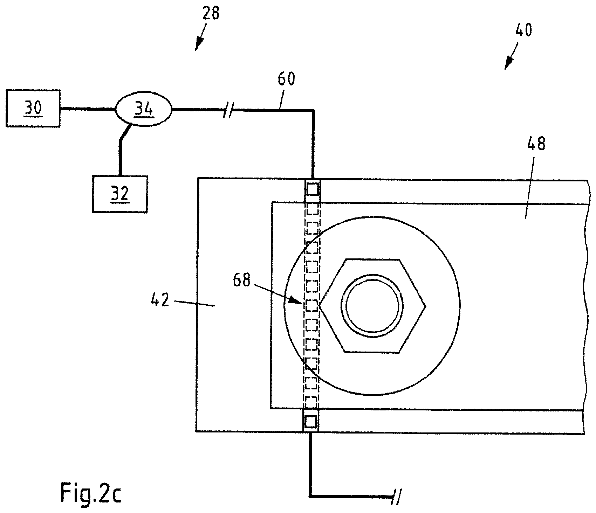

Die Figuren 2a-c zeigen ein erstes Ausführungsbeispiel des Systems. Fig. 2a zeigt eine schematische Schnittansicht vor Fertigstellung einer Schraubverbindung, Fig. 2b zeigt eine schematische Schnittansicht nach Fertigstellung der Schraubverbindung und Fig. 2c zeigt eine schematische Aufsicht.

Das System 40 umfasst ein erstes Bauteil 42 mit einem Gewindezapfen 44 zur Herstellung einer Schraubverbindung 46 mit einem zweiten Bauteil 48. Die Schraubverbindung 46 wird vorliegend bewirkt, indem der Gewindezapfen 44 durch eine Ausnehmung 50 des zweiten Bauteils 48 geführt und eine Mutter 52 mit unterlegter Unterlegscheibe 54 auf den Gewindezapfen 44 aufgeschraubt wird, so dass das zweite Bauteil 42 mit dem ersten Bauteil 44 verbunden ist.

Das erste Bauteil 42 weist eine Kontaktfläche 56 auf, mit der das erste Bauteil 48 bei Herstellung der Schraubverbindung 46 mit dem zweiten Bauteil 48 in Anlage kommt (vgl. Fig. 2b). In diesem Bereich wirkt daher nach Fertigstellung der Schraubverbindung 46 ein Anpressdruck von dem zweiten Bauteil 48 auf das erste Bauteil 42.

Im Bereich der Kontaktfläche 56 ist eine Nut 58 in das erste Bauteil 42 eingebracht, in der eine optische Faser 60 angeordnet ist. In die Nut 58 ist weiterhin ein elastisches Druckübertragungselement 62 aus Kunststoff eingelegt, das eine in der Kontaktfläche 56 angeordnete Fläche 64 und eine an der optischen Faser 60 anliegende Fläche 66 aufweist. Die Fläche 66 ist an die Form der optischen Faser 60 angepasst.

Nach Fertigstellung der Schraubverbindung 46 übt das zweite Bauteil 48 im Bereich der Kontaktfläche 56 und damit auch auf das Druckübertragungselement 62 einen Anpressdruck auf das erste Bauteil 42 aus. Das Druckübertragungselement 62 überträgt wiederum einen von diesem Anpressdruck abhängigen Druck auf die optische Faser 60.

Da das Druckübertragungselement 62 elastisch ist und die an der optischen Faser 60 anliegende Fläche 66 aufgrund deren Krümmung größer ist als die in der Ebene der Kontaktfläche 56 liegende Fläche 64, ist der auf die optische Faser wirkende Druck geringer als der Anpressdruck des zweiten Bauteils 48 auf das erste Bauteil 42. Auf diese Weise wird erreicht, dass die typischerweise recht spröde optische Faser 60 auch bei hohen Drücken nicht beschädigt wird; weiterhin wird durch das Druckübertragungselement 62 ein vom Anpressdruck abhängiger Druck auf die optische Faser übertragen, so dass über die Faser 60 eine Überwachung des Anpressdrucks möglich ist. Die Faser 60 im Bereich der Kontaktfläche 56 stellt damit einen faseroptischen Sensor 68 dar.

Die optische Faser ist mit einer optischen Messanordnung 28 verbunden, wie sie Figur 1b dargestellt ist. Indem mit der Lichtquelle 30 ein Lichtimpuls durch die optische Faser 60 gesandt und dessen Reflexion mit dem Analysator 32 beobachtet wird, kann der auf die optische Faser 60 wirkende Druck überwacht und dadurch auf den Anpressdruck zwischen dem zweiten Bauteil 48 und dem ersten Bauteil 42 rückgeschlossen werden.

Damit erlaubt das in Figur 2a-c dargestellte System 40 die Überwachung des Anpressdrucks der Schraubverbindung 46.

Anstelle des faseroptischen Sensors 62 mit der optischen Faser 60 kann auch ein faseroptischer Sensor verwendet werden, wie er in Figur 1a gezeigt ist. In diesem Fall wird der Resonator 6 am Ende der optischen Faser 4 im Bereich der Kontaktfläche 56 angeordnet, beispielsweise in der Nut 58.

Der faseroptische Sensor kann auch im Bauteil 48 angeordnet sein, beispielsweise im Bereich der Kontaktfläche zum Bauteil 42 oder im Bereich der Kontaktfläche zur Unterlegscheibe 54. In diesem Fall würde das Bauteil 48 das erste Bauteil und das Bauteil 42 bzw. die Unterlegscheibe 54 das zweite Bauteil des Systems darstellen. Alternativ könnte der faseroptische Sensor auch in der Unterlegscheibe angeordnet sein.

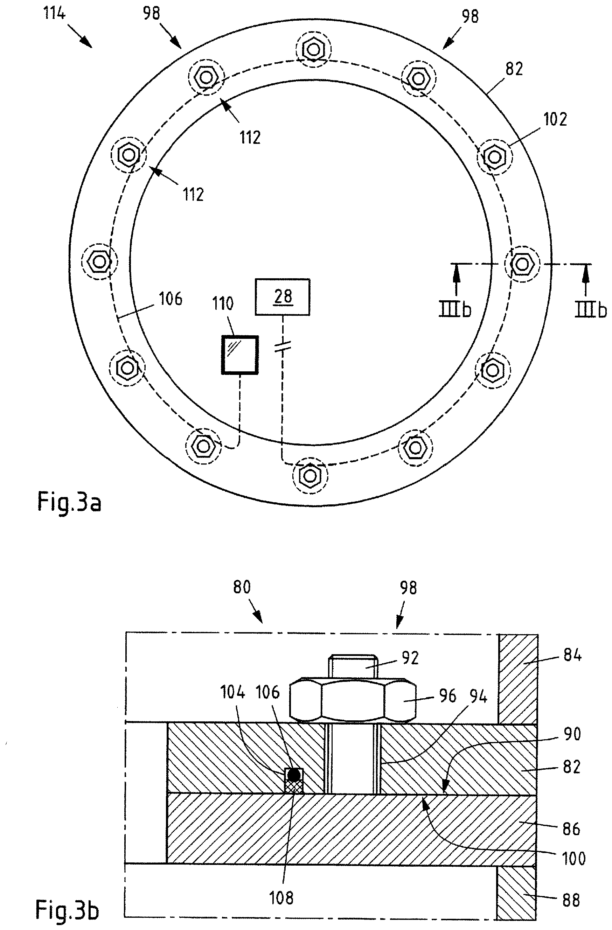

Die Figuren 3a-b zeigen ein weiteres Ausführungsbeispiel des Systems. Fig. 3a zeigt eine schematische Aufsicht; Fig. 3b eine schematische Schnittansicht entsprechend der in Fig. 3a mit "IIIb" bezeichneten Schnittebene.

Das System 80 umfasst ein erstes Bauteil 82 in Form eines Nabenflansches einer Rotornabe 84 einer Windenergieanlage zur Montage eines Rotorblatts. Das zweite Bauteil 86 des Systems 80 ist ein Rotorblattflansch eines Rotorblatts 88, mit dem das Rotorblatt 88 an der Rotornabe 84 befestigt wird.

Zu diesem Zweck sind auf der Flanschfläche 90 des Rotorblattflansches 86 umlaufend eine Mehrzahl von Gewindezapfen 92 vorgesehen, die zur Verbindung des Rotorblattflansches 86 mit dem Nabenflansch 82 durch entsprechende Bohrungen 94 des Nabenflanschs 82 geführt und dann mittels Muttern 96 fixiert werden.

Um eine sichere Verbindung zwischen Rotorblatt 88 und Rotornabe 84 zu gewährleisten, ist ein bestimmter Anpressdruck für die durch die Gewindezapfen 92 und Muttern 96 bewirkten Schraubverbindungen 98 vorgeschrieben, mit dem die Flanschfläche 90 des Rotorblattflansches 86 und die Flanschfläche 100 des Nabenflansches 82 in einer jeweiligen Kontaktfläche 102 um die einzelnen Gewindezapfen 92 aufeinanderpressen müssen.

Um diesen Anpressdruck zu überwachen, ist in die Flanschfläche 100 des Nabenflansches 82 eine im Wesentlichen kreisförmige Nut 104 eingebracht, in die eine optische Faser 106 eingelegt und mit einem elastischen Druckübertragungselement 108 abgedeckt ist. Die optische Faser 106 ist so angeordnet, dass sie nacheinander durch die einzelnen Kontaktflächen 102 der jeweiligen Schraubverbindungen 98 verläuft.

Ein Ende der Faser 106 ist mit einer optischen Messanordnung 28 wie in Fig. 1b dargestellt verbunden und das andere Ende der Faser 106 mit einem Spiegel 110. Alternativ können auch beide Enden der Faser 106 zu der optischen Messanordnung 28 geführt werden.

Dadurch, dass Abschnitte 112 der optischen Faser 106 durch die einzelnen Kontaktbereiche 102 der jeweiligen Schraubverbindungen 98 geführt ist, können mit der optischen Messanordnung 28 die auf die Faser wirkenden Drücke und damit die Anpressdrücke der einzelnen Schraubverbindungen 98 überwacht werden. Weiterhin kann durch eine Laufzeitanalyse mit der Messanordnung 28 bestimmt werden, welcher Anpressdruck in welcher Kontaktfläche 102 anliegt. Damit kann bei einer Veränderung des Anpressdrucks in einer der Kontaktflächen 102 insbesondere bestimmt werden, welche der Schraubverbindungen 98 hiervon betroffen ist. Auf diese Weise ist eine gleichzeitige Überwachung mehrerer Schraubverbindungen 98 durch die optische Faser 106 möglich. Der faseroptische Sensor umfasst bei dem System 80 damit mehrere Abschnitte 112 der optischen Faser 106 und stellt folglich einen faseroptischen Sensor 114 für mehrere Schraubverbindungen 98 dar.

Alternativ könnten auch mehrere faseroptische Sensoren vorgesehen sein, beispielsweise mit einer optischen Faser je Schraubverbindung 98.

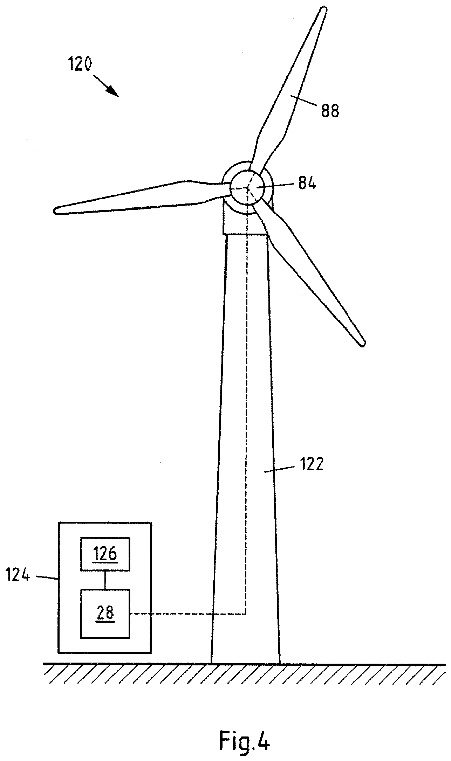

Figur 4 zeigt eine Windenergieanlage 120 mit der Rotornabe 84, an dem drei Rotorblätter und insbesondere auch das Rotorblatt 88 aus Figur 3a-b, angeschlossen sind. Alle drei Rotorblätter werden, wie in Figur 3a-b für das Rotorblatt 88 dargestellt, mittels einer jeweiligen optischen Faser als faseroptischer Sensor überwacht und die optischen Fasern werden über den Turm 122 der Windenergieanlage 120 zu einer Station 124 am Boden, beispielsweise einer Steuereinrichtung eines Windparks, geführt und in einer dort vorgesehenen optischen Messanordnung 28 wie in Fig. 1b gezeigt analysiert.

Auf ähnliche Weise können auch optische Fasern von anderen Windenergieanlagen des Windparks zu der optischen Messanordnung 28 verlegt sein, sodass an einer Stelle die Anpressdrücke der Schraubverbindungen für den gesamten Windpark überwacht werden können.

Die Messanordnung 28 ist an eine Steuereinrichtung 126 angeschlossen, die überwacht, ob der Anpressdruck einer der Schraubverbindungen 98 unter einen vorgegebenen Wert fällt, und in diesem Fall eine Mitteilung ausgibt, insbesondere unter Angabe der betroffenen Schraubverbindung 98.

Auf diese Weise sind regelmäßige manuelle Überprüfungen der Schraubverbindungen 98 entbehrlich. Stattdessen kann eine Schraubverbindung 98 gezielt überprüft bzw. nachgezogen werden, wenn durch die Steuereinrichtung 126 die Reduzierung des Anpressdrucks angezeigt wird. Dadurch können erhebliche Wartungskosten eingespart werden.

## Patentansprüche

1. System (40, 80) zur Überwachung des Anpressdrucks einer kraft- und/oder formschlüssigen Verbindung (46, 98),
- mit einem ersten Bauteil (42, 82), das dazu vorgesehen ist, mittels einer kraft- und/oder formschlüssigen Verbindung (46, 98) mit einem zweiten Bauteil (48, 86) verbunden zu werden,
- wobei das erste Bauteil (42, 82) eine Kontaktfläche (56, 102) aufweist, die dazu vorgesehen ist, bei der Herstellung der kraft- und/oder formschlüssigen Verbindung (46, 98) mit dem zweiten Bauteil (48, 86) in Anlage zu kommen, insbesondere im Bereich der kraft- und/oder formschlüssigen Verbindung (46, 98),
- wobei ein faseroptischer Sensor (2, 22, 68, 108) derart im Bereich der Kontaktfläche (56, 102) des ersten Bauteils angeordnet ist, dass eine von dem auf die Kontaktfläche (56, 102) wirkenden Anpressdruck abhängige mechanische Belastung auf den faseroptischen Sensor (2, 22, 68, 108) übertragen wird,
**dadurch gekennzeichnet,**
- **dass** im Bereich der Kontaktfläche (56, 102) eine Nut (58, 104) vorgesehen ist, in der der faseroptische Sensor (4, 24, 60, 106) angeordnet ist, wobei zwischen dem faseroptischen Sensor (4, 24, 60, 106) und der Ebene der Kontaktfläche (56, 102) ein Druckübertragungselement (62, 108) vorgesehen ist, das einen von einem auf die Kontaktfläche (56, 102) wirkenden Anpressdruck (p) abhängigen reduzierten Druck auf den faseroptischen Sensor (4, 24, 60,106) überträgt, und wobei das Druckübertragungselement (62, 108) ein elastisches Element ist.

2. System nach Anspruch 1,
weiter umfassend das zweite Bauteil (48, 86).

3. System nach Anspruch 1 oder 2,
**dadurch gekennzeichnet, dass**
der faseroptischer Sensor (2, 22, 68, 108) einen Abschnitt (26) einer optischen Faser (24, 60, 106) umfasst, der derart im Bereich der Kontaktfläche (56, 102) des ersten Bauteils (42, 82) angeordnet ist, dass eine von dem auf die Kontaktfläche (56, 102) wirkenden Anpressdruck (p) abhängige mechanische Belastung auf den Abschnitt (26) der optischen Faser (4, 24, 60, 106) übertragen wird.

4. System nach einem der Ansprüche 1 bis 3,
**dadurch gekennzeichnet, dass**
der faseroptischer Sensor (4, 24, 60, 106) ein Sensorelement (6) am Ende einer optischen Faser (4) umfasst, das derart im Bereich der Kontaktfläche (56, 102) des ersten Bauteils (42, 82) angeordnet ist, dass eine von dem auf die Kontaktfläche (56, 102) wirkenden Anpressdruck (p) abhängige mechanische Belastung auf das Sensorelement (6) übertragen wird.

5. System nach einem der Ansprüche 1 bis 4,
**dadurch gekennzeichnet, dass** das Druckübertragungselement (62,108) ein elastisches Element aus Kunststoff ist.

6. System nach Anspruch 5,
**dadurch gekennzeichnet, dass** das Druckübertragungselement (62, 108) eine in der Kontaktfläche (56, 102) angeordnete erste Fläche (64) und eine an dem faseroptischen Sensor (4, 24, 60, 106) anliegende zweite Fläche (66) aufweist, wobei die zweite Fläche (66), größer ist als die erste Fläche (64).

7. System nach einem der Ansprüche 1 bis 6,
**dadurch gekennzeichnet,**
- **dass** das erste Bauteil (42, 82) dazu vorgesehen ist, mittels mehrerer kraft- und/oder formschlüssigen Verbindungen (46, 98) mit einem oder mehreren zweiten Bauteilen (48, 86) verbunden zu werden,
- **dass** das erste Bauteil (42, 82) mehrere Kontaktflächen (56, 102) aufweist, die jeweils dazu vorgesehen sind, bei der Herstellung einer jeweiligen der kraft- und/oder formschlüssigen Verbindungen (46, 98) im Bereich der jeweiligen kraft- und/oder formschlüssigen Verbindung (46, 98) mit dem einen oder einem der mehreren zweiten Bauteile (48, 86) in Anlage zu kommen, und
- **dass** der faseroptische Sensor (24, 60, 106) mehrere Abschnitte (26, 112) einer optischen Faser (24, 60, 106) umfasst, die jeweils derart im Bereich einer jeweiligen Kontaktfläche (56, 102) des ersten Bauteils (42, 82) angeordnet sind, dass eine von dem auf die jeweilige Kontaktfläche (56, 102) wirkenden Anpressdruck abhängige mechanische Belastung (p) auf den jeweiligen Abschnitt (26, 112) der optischen Faser (24, 60, 106) übertragen wird.

8. System nach einem der Ansprüche 1 bis 7,
weiter umfassend eine mit dem faseroptischen Sensor (4, 24, 60, 106) verbindbare oder verbundene optische Messanordnung (8, 28).

9. System nach Anspruch 8,
**dadurch gekennzeichnet, dass** die optische Messanordnung (8, 28) dazu eingerichtet ist, eine Messung an dem faseroptischen Sensor (4, 24, 60, 106) durchzuführen und aus dem Messergebnis einen Wert für eine auf den faseroptischen Sensor (4, 24, 60, 106) wirkende mechanische Belastung, insbesondere Druckbelastung, zu bestimmen.

10. System nach Anspruch 8 oder 9,
**dadurch gekennzeichnet, dass** die optische Messanordnung (8, 28) dazu eingerichtet ist, abhängig von einer Laufzeit eines Signals durch den faseroptischen Sensor (4, 24, 60, 106) eine Position einer auf den faseroptischen Sensor (4, 24, 60, 106) wirkenden mechanischen Belastung zu bestimmen.

11. System nach einem der Ansprüche 8 bis 10,
umfassend eine Steuereinrichtung (126), die dazu eingerichtet ist, einen Wert für eine auf den faseroptischen Sensor (4, 24, 60, 106) wirkende mechanische Belastung, insbesondere Druckbelastung, zu überwachen und bei einer Reduzierung des Werts unterhalb eines vorgegebenen Grenzwerts die Ausgabe einer Meldung zu veranlassen.

12. Verwendung eines Systems (40, 80) nach einem der Ansprüche 1 bis 11 mit einem faseroptischen Sensor (4, 24, 60, 106), zur Überwachung des Anpressdrucks (p) einer kraft- und/oder formschlüssigen Verbindung (46, 98), insbesondere einer Schraubverbindung.

13. Verwendung nach Anspruch 12,
**dadurch gekennzeichnet, dass** der faseroptische Sensor (4, 24, 60, 106) zur Überwachung des Anpressdrucks (p) einer kraft- und/oder formschlüssigen Verbindung (46, 98) an einer Windenergieanlage (120) verwendet wird.

14. Verfahren zur Überwachung des Anpressdrucks (p) einer kraft- und/oder formschlüssigen Verbindung (46, 98) unter Verwendung eines Systems (40, 80) nach einem der Ansprüche 1 bis 11,
- bei dem durch Messung mittels eines faseroptischen Sensors (4, 24, 60, 106), der derart im Bereich einer Kontaktfläche (56, 102) eines ersten Bauteils (42, 82), in dem das erste Bauteil (42, 82) durch die kraft- und/oder formschlüssige Verbindung (46, 98) mit einem zweiten Bauteil (48, 86) in Anlage ist, angeordnet ist, dass eine von dem auf die Kontaktfläche (56, 102) wirkenden Anpressdruck (p) abhängige mechanische Belastung auf den faseroptischen Sensor (4, 24, 60, 106) übertragen wird, ein Wert für eine auf den faseroptischen Sensor (4, 24, 60, 106) wirkende mechanische Belastung, insbesondere Druckbelastung, bestimmt und die Entwicklung dieses Werts über die Zeit überwacht wird.

## Claims

1. System (40, 80) for monitoring the contact pressure of a force-locking and/or form-locking connection (46, 98),
- with a first component (42, 82) designated to be connected to a second component (48, 86) by means of a force-locking and/or form-locking connection (46, 98),
- wherein the first component (42, 82) has a contact surface (56, 102) which is designated to come into contact with the second component (48, 86) during establishing of the force-locking and/or form-locking connection (46, 98), in particular in the region of the force-locking and/or form-locking connection (46, 98),
- wherein a fiber-optic sensor (2, 22, 68, 108) is arranged in the region of the contact surface (56, 102) of the first component in such a way that a mechanical load dependent on the contact pressure acting on the contact surface (56, 102) is transferred to the fiber-optic sensor (2, 22, 68, 108),
**characterized**
- **in that** a groove (58, 104) is provided in the region of the contact surface (56, 102), in which groove the fiber-optic sensor (4, 24, 60, 106) is arranged, wherein a pressure transfer element (62, 108) is provided between the fiber-optic sensor (4, 24, 60, 106) and the plane of the contact surface (56, 102), which pressure transfer element transfers to the fiber-optic sensor (4, 24, 60, 106) a reduced pressure dependent on a contact pressure (p) acting on the contact surface (56, 102), and wherein the pressure transfer element (62, 108) is an elastic element.

2. System according to claim 1,
further comprising the second component (48, 86).

3. System according to claim 1 or 2,
**characterized in that** the fiber-optic sensor (2, 22, 68, 108) comprises a section (26) of an optical fiber (24, 60, 106) which is arranged in the region of the contact surface (56, 102) of the first component (42, 82) in such a way that a mechanical load dependent on the contact pressure (p) acting on the contact surface (56, 102) is transferred to the section (26) of the optical fiber (4, 24, 60, 106).

4. System according to any one of claims 1 to 3,
**characterized in that** the fiber-optic sensor (4, 24, 60, 106) comprises a sensor element (6) at the end of an optical fiber (4), which end is arranged in the region of the contact surface (56, 102) of the first component (42, 82) in such a way that a mechanical load dependent on the contact pressure (p) acting on the contact surface (56, 102) is transferred to the sensor element (6).

5. System according to any one of claims 1 to 4,
**characterized in that** the pressure transfer element (62, 108) is an elastic element made of plastic.

6. System of claim 5,
**characterized in that** the pressure transfer element (62, 108) has a first area (64) disposed in the contact surface (56, 102) and a second area (66) abutting the fiber-optic sensor (4, 24, 60, 106), the second area (66) being larger than the first area (64).

7. System according to any one of claims 1 to 6,
**characterized**
- **in that** the first component (42, 82) is designated to be connected to one or more second components (48, 86) by means of a plurality of force-locking and/or form-locking connections (46, 98),
- **in that** the first component (42, 82) has a plurality of contact surfaces (56, 102), each of which is designated to come into contact with the one or with one of the plurality of second components (48, 86) in the region of a respective one of the force-locking and/or form-locking connections (46, 98) when a respective one of the force-locking and/or form-locking connections (46, 98) is established, and
- that the fiber-optic sensor (24, 60, 106) comprises a plurality of sections (26, 112) of an optical fiber (24, 60, 106), each of which is arranged in the region of a respective contact surface (56, 102) of the first component (42, 82) in such a way that a mechanical load (p) dependent on the contact pressure acting on the respective contact surface (56, 102) is transferred to the respective section (26, 112) of the optical fiber (24, 60, 106).

8. System of any one of claims 1 to 7,
further comprising an optical measurement arrangement (8, 28) connectable or connected to the fiber-optic sensor (4, 24, 60, 106).

9. System according to claim 8,
**characterized in that** the optical measuring arrangement (8, 28) is configured to perform a measurement on the fiber-optic sensor (4, 24, 60, 106) and to determine from the measurement result a value for a mechanical load, in particular pressure load, acting on the fiber-optic sensor (4, 24, 60, 106).

10. System according to claim 8 or 9,
**characterized in that** the optical measuring arrangement (8, 28) is configured to determine a position of a mechanical load acting on the fiber-optic sensor (4, 24, 60, 106) depending on a propagation time of a signal through the fiber-optic sensor (4, 24, 60, 106).

11. System according to any one of claims 8 to 10,
comprising a control device (126) which is configured to monitor a value for a mechanical load, in particular pressure load, acting on the fiber-optic sensor (4, 24, 60, 106) and, in the event of a reduction in the value below a predetermined threshold value, to cause a message to be output.

12. Use of a system (40, 80) according to any one of claims 1 to 11 with a fiber-optic sensor (4, 24, 60, 106) for monitoring the contact pressure (p) of a force-locking and/or form-locking connection (46, 98), in particular a screw connection.

13. Use according to claim 12,
**characterized in that** the fiber-optic sensor (4, 24, 60, 106) is used to monitor the contact pressure (p) of a force-locking and/or form-locking connection (46, 98) on a wind turbine (120).

14. Method for monitoring the contact pressure (p) of a force-locking and/or form-locking connection (46, 98) using a system (40, 80) according to any one of claims 1 to 11,
- in which, by measurement using a fiber-optic sensor (4, 24, 60, 106), which fibre-optic sensor is arranged in the region of a contact surface (56, 102) of a first component (42, 82), in which region the first component (42, 82) is in contact with a second component (48, 86) by means of the force-locking and/or form-locking connection (46, 98), in such a way that a mechanical load (p) which is dependent on the contact pressure acting on the contact surface (56, 102) is transferred to the fiber-optic sensor (4, 24, 60, 106), a value for a mechanical load, in particular pressure load, acting on the fiber-optic sensor (4, 24, 60, 106) is determined, and the development of this value over time is monitored.

## Revendications

1. Système (40, 80) de surveillance de la pression de contact d'une liaison (46, 98) par force et/ou par forme,
- avec un premier composant (42, 82) qui est prévu pour être relié à un deuxième composant (48, 86) au moyen d'une liaison (46, 98) par force et/ou par forme,
- le premier composant (42, 82) présentant une surface de contact (56, 102) qui est prévue pour venir en contact avec le deuxième composant (48, 86) lors de la réalisation de la liaison par force et/ou par forme (46, 98), en particulier dans la zone de la liaison par force et/ou par forme (46, 98),
- un capteur à fibre optique (2, 22, 68, 108) étant disposé dans la zone de la surface de contact (56, 102) du premier composant de telle sorte qu'une charge mécanique dépendant de la pression de contact agissant sur la surface de contact (56, 102) est transmise au capteur à fibre optique (2, 22, 68, 108),
**caractérisé**
- **en ce qu'**une rainure (58, 104) est prévue dans la zone de la surface de contact (56, 102), dans laquelle est disposé le capteur à fibre optique (4, 24, 60, 106), un élément de transmission de pression (62, 108) étant prévu entre l'élément de transmission de pression (62, 108) et le plan de la surface de contact (56, 102), lequel élément de transmission de pression (62, 108) transmet au capteur à fibre optique (4, 24, 60, 106) une pression réduite dépendant d'une pression de contact (p) agissant sur la surface de contact (56, 102), et l'élément de transmission de pression (62, 108) étant un élément élastique.

2. Système selon la revendication 1,
comprenant en outre le deuxième composant (48, 86).

3. Système selon la revendication 1 ou 2,
**caractérisé en ce que**
le capteur à fibre optique (2, 22, 68, 108) comprend une portion (26) d'une fibre optique (24, 60, 106) qui est disposée dans la zone de la surface de contact (56, 102) du premier composant (42, 82) de telle sorte qu'une charge mécanique dépendant de la pression de contact (p) agissant sur la surface de contact (56, 102) est transmise à la portion (26) de la fibre optique (4, 24, 60, 106).

4. Système selon l'une quelconque des revendications 1 à 3,
**caractérisé en ce que**
le capteur à fibre optique (4, 24, 60, 106) comprend un élément de détection (6) à l'extrémité d'une fibre optique (4), laquelle extrémité est disposée dans la zone de la surface de contact (56, 102) du premier composant (42, 82) de telle sorte qu'une charge mécanique dépendant de la pression de contact (p) agissant sur la surface de contact (56, 102) est transmise à l'élément de détection (6).

5. Système selon l'une quelconque des revendications 1 à 4,
**caractérisé en ce que** l'élément de transmission de pression (62, 108) est un élément élastique en matière plastique.

6. Système selon la revendication 5,
**caractérisé en ce que** l'élément de transmission de pression (62, 108) présente une première surface (64) disposée dans la surface de contact (56, 102) et une deuxième surface (66) adjacente au capteur à fibre optique (4, 24, 60, 106), la deuxième surface (66) étant plus grande que la première surface (64).

7. Système selon l'une quelconque des revendications 1 à 6,
**caractérisé**
- **en ce que** le premier composant (42, 82) est prévu pour être relié à un ou plusieurs deuxièmes composants (48, 86) au moyen de plusieurs liaisons (46, 98) par force et/ou par forme,
- **en ce que** le premier composant (42, 82) présente plusieurs surfaces de contact (56, 102) qui sont respectivement prévues pour, lors de la réalisation d'une respective des liaisons par force et/ou par forme (46, 98), venir en contact avec l'un ou un des plusieurs deuxièmes composants (48, 86) dans la zone de la liaison par force et/ou par forme respective (46, 98), et
- **en ce que** le capteur à fibre optique (24, 60, 106) comprend plusieurs portions (26, 112) d'une fibre optique (24, 60, 106) qui sont disposées chacune dans la zone d'une surface de contact respective (56, 102) du premier composant (42, 82) de telle sorte qu'une charge mécanique (p) dépendant de la pression de contact agissant sur la surface de contact respective (56, 102) est transmise à la portion respective (26, 112) de la fibre optique (24, 60, 106).

8. Système selon l'une quelconque des revendications 1 à 7,
comprenant en outre un agencement de mesure optique (8, 28) relié ou pouvant être relié au capteur à fibre optique (4, 24, 60, 106).

9. Système selon la revendication 8,
**caractérisé en ce que** l'agencement de mesure optique (8, 28) est conçu pour effectuer une mesure au niveau du capteur à fibre optique (4, 24, 60, 106) et pour déterminer, à partir du résultat de la mesure, une valeur pour une charge mécanique, en particulier une charge de pression, agissant sur le capteur à fibre optique (4, 24, 60, 106).

10. Système selon la revendication 8 ou 9,
**caractérisé en ce que** l'agencement de mesure optique (8, 28) est configuré pour déterminer, en fonction d'un temps de propagation d'un signal à travers le capteur à fibre optique (4, 24, 60, 106), une position d'une charge mécanique agissant sur le capteur à fibre optique (4, 24, 60, 106).

11. Système selon l'une des revendications 8 à 10,
comprenant un dispositif de commande (126) qui est configuré pour surveiller une valeur pour une charge mécanique, en particulier une charge de pression, agissant sur le capteur à fibre optique (4, 24, 60, 106) et pour provoquer l'émission d'un message en cas de réduction de la valeur en dessous d'une valeur limite prédéfinie.

12. Utilisation d'un système (40, 80) selon l'une des revendications 1 à 11 avec un capteur à fibre optique (4, 24, 60, 106), pour la surveillance de la pression de contact (p) d'une liaison (46, 98) par force et/ou par forme, en particulier d'une liaison vissée.

13. Utilisation selon la revendication 12,
**caractérisée en ce que** le capteur à fibre optique (4, 24, 60, 106) est utilisé pour surveiller la pression de contact (p) d'une liaison (46, 98) par force et/ou par forme sur une installation d'énergie éolienne (120).

14. Procédé de surveillance de la pression de contact (p) d'une liaison (46, 98) par force et/ou par forme, utilisant un système (40, 80) selon l'une des revendications 1 à 11,
- dans lequel, par mesure au moyen d'un capteur à fibre optique (4, 24, 60, 106) qui est disposé de telle sorte dans la zone d'une surface de contact (56, 102) d'un premier composant (42, 82), dans laquelle zone le premier composant (42, 82) est en contact avec un deuxième composant (48, 86) par la liaison (46, 98) par force et/ou par forme, qu'une charge mécanique dépendant de la pression de contact (p) agissant sur la surface de contact (56, 102) est transmise au capteur à fibre optique (4, 24, 60, 106), une valeur pour une charge mécanique, en particulier une charge de pression, agissant sur le capteur à fibre optique (4, 24, 60, 106) est déterminée et l'évolution de cette valeur dans le temps est surveillée.
